# FASCICULE DE BREVET EUROPEEN

(11) **EP 1 452 691 B1**
(45) Date de publication et mention de la délivrance du brevet: **12.12.2007**
(21) Numéro de dépôt: 04290323.7
(22) Date de dépôt: 09.02.2004
(51) Int. Cl.: F01D 5/18

(54) **Plate-forme annulaire de distributeur d'une turbine basse-pression de turbomachine**
Ringförmige Leitschaufelplattform einer Niederdruckstufe einer Gasturbine
Annular stator blade platform for low pressure turbine in a gas turbine engine

(30) Priorité: 14.02.2003 FR 0301841
(43) Date de publication de la demande: 01.09.2004
(73) Titulaire: SNECMA, 75015 Paris (FR)
(72) Inventeur: Imbourg, Sébastien, 91330 Yerres (FR); Soupizon, Jean-Luc, 77000 Vaux-le-Penil (FR); Pabion, Philippe, 77000 Vaux-le-Penil (FR); Guimbard, Jean-Michel, 77930 Perthes (FR)
(74) Mandataire: Thévenet, Jean-Bruno

(56) Documents cités:
- EP-A- 0 698 723
- US-A- 3 446 481
- US-B1- 6 227 798

## Description

### Arrière-plan de l'invention

La présente invention se rapporte au domaine général des distributeurs des turbines basse-pression de turbomachine. Elle vise plus particulièrement une plate-forme supérieure et une plate-forme inférieure servant de supports pour les aubes fixes de ces distributeurs.

Dans une turbomachine, le distributeur de la turbine basse-pression est disposé en aval de la turbine haute-pression dans le sens d'écoulement gazeux traversant la turbomachine. La figure 5 représente schématiquement la jonction entre les turbines haute et basse pression d'une turbomachine classique. Sur cette figure, la turbine haute-pression 100 comporte une rangée d'aubes mobiles 102 espacées circonférentiellement autour d'un axe longitudinal 104 de la turbine. Comme représenté par la flèche 106, le flux gazeux issu de la turbine haute-pression s'écoule vers le distributeur 108 de la turbine basse-pression. Celui-ci est notamment formé d'une pluralité d'aubes fixes 110 qui s'étendent radialement entre des plates-formes annulaires supérieure 112 et inférieure 114 formant supports. Ces aubes fixes 110, qui sont également espacées circonférentiellement autour de l'axe longitudinal 104, permettent de diriger le flux gazeux issu de la turbine haute-pression selon un angle et une vitesse appropriés. Les surfaces internes 116, 118 des plates-formes supérieure 112 et inférieure 114 de support des aubes fixes 110 délimitent entre elles un canal aérodynamique 120 pour l'écoulement du flux gazeux.

Pour améliorer le rendement de la turbine basse-pression, il est connu d'allonger le canal aérodynamique d'écoulement du flux gazeux traversant la turbomachine en éloignant le bord d'attaque des aubes fixes de la turbine basse-pression du bord de fuite des aubes mobiles de la turbine haute-pression. Cet aménagement nécessite toutefois d'assurer une continuité du canal aérodynamique en amont des plates-formes pour limiter les pertes de charges entre la turbine haute-pression et le distributeur. Une solution connue à ce problème consiste à munir les plates-formes du distributeur de la turbine basse-pression de viroles s'étendant en amont dans le prolongement des plates-formes intérieure et supérieure. Ces viroles sont généralement fixées à un carter de la turbomachine par des liaisons boulonnées. Cette solution présente toutefois des inconvénients liés notamment à l'ajout préjudiciable de masse que représentent de telles viroles et leurs liaisons. En outre, en l'absence de système spécifique de refroidissement, ces viroles ont tendance à s'échauffer rapidement ce qui dégrade la tenue mécanique et la qualité de la continuité du canal aérodynamique. En pratique, on constate en effet une détérioration rapide de la tenue mécanique des viroles ainsi qu'une formation de marches au niveau de la surface interne de celles-ci qui sont particulièrement préjudiciables au rendement et à la durée de vie de la turbine basse-pression.

US 6 277 798 et EP 0,698,723 décrivent des distributeurs de turbine à gaz dont les aubes présentent des plates-formes qui s'étendent au-delà de leur bord d'attaque vers le bord de fuite des aubes mobiles

### Objet et résumé de l'invention

La présente invention vise donc à pallier de tels inconvénients en proposant une plate-forme de distributeur qui permet d'allonger le canal aérodynamique d'écoulement du flux gazeux sans dégrader la tenue mécanique et le rendement du distributeur.

A cet effet, il est prévu une plate-forme annulaire de distributeur d'une turbine basse-pression de turbomachine telle que définie par la revendication 1.

La plate-forme et sa partie amont s'étendant au-delà du bord d'attaque de l'aube fixe sont réalisées en une seule et même pièce. De la sorte, il est possible d'allonger le canal aérodynamique d'écoulement du flux gazeux sans ajout de masse préjudiciable au fonctionnement du distributeur. Une telle plate-forme peut indifféremment constituer une plate-forme supérieure ou une plate-forme inférieure du distributeur.

La partie amont de la plate-forme comporte un circuit de refroidissement qui lui est propre afin d'homogénéiser la température et de diminuer les gradients de températures de la plate-forme. Un tel circuit de refroidissement permet notamment d'éviter la formation d'une discontinuité du canal aérodynamique. La durée de vie et le rendement du distributeur ne sont donc pas affectés par l'allongement du canal aérodynamique d'écoulement du flux gazeux traversant la turbomachine.

Lorsque la plate-forme constitue une plate-forme supérieure de distributeur, les moyens d'alimentation en air se composent d'au moins un orifice s'ouvrant dans un collecteur d'air destiné au refroidissement de l'aube fixe et débouchant dans la cavité. De préférence, ces moyens d'alimentation comportent au moins deux orifices ayant des inclinaisons différentes afin de répartir de façon homogène l'air de refroidissement dans la cavité.

Lorsque la plate-forme constitue une plate-forme inférieure de distributeur, les moyens d'alimentation en air comportent un orifice traversant la plate-forme inférieure qui est destiné à l'évacuation de l'air de refroidissement de l'aube fixe. De préférence, la plate-forme inférieure comporte en outre au moins un déflecteur disposé parallèlement à la partie amont de la plate-forme de façon à former un canal annulaire de refroidissement entre le déflecteur et la plate-forme.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue partielle en coupe longitudinale d'un distributeur de turbine basse-pression comportant une plate-forme supérieure et une plate-forme inférieure selon l'invention ;
- la figure 2 est une vue de dessus d'une plate-forme supérieure de distributeur selon l'invention ;
- la figure 3 est une vue en perspective d'une plate-forme inférieure de distributeur selon l'invention ;
- la figure 4 est une vue en perspective et en éclaté de la plate-forme inférieure de la figure 3 ; et
- la figure 5 est une vue en coupe longitudinale d'une jonction classique entre une turbine haute-pression et un distributeur de turbine basse-pression.

### Description détaillée d'un mode de réalisation

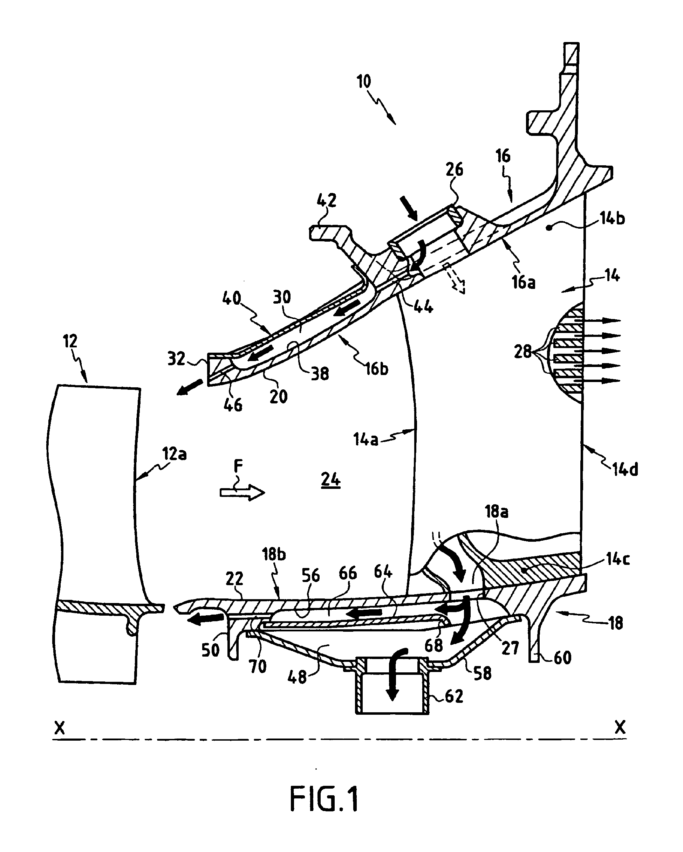

La figure 1 représente partiellement en coupe longitudinale un distributeur 10 d'une turbine basse-pression d'axe longitudinal X-X. Sur cette figure, une aube mobile 12 de la turbine haute-pression disposée en amont du distributeur 10 est également représentée. Bien entendu, la turbine haute-pression comporte une pluralité d'aubes mobiles 12 dont les bords de fuite 12a sont alignés les uns par rapport aux autres. La direction d'écoulement du flux gazeux issu de la turbine haute-pression est schématisée par la flèche F.

Le distributeur 10 comporte une pluralité d'aubes fixes 14 espacées de façon circonférentielle autour de l'axe longitudinal X-X de la turbine basse-pression. Les aubes fixes 14 sont disposées dans l'écoulement du flux gazeux de sorte que leurs bords d'attaque 14a soient alignés les uns par rapport aux autres. L'extrémité radiale supérieure (ou sommet) 14b de chaque aube fixe 14 est supportée par une partie aval 16a d'une plate-forme supérieure annulaire 16. De même, l'extrémité radiale inférieure (ou pied) 14c de chaque aube fixe est supportée par une partie aval 18a d'une plate-forme inférieure annulaire 18. Les plates-formes inférieure et supérieure peuvent être composées d'un seul ou d'une pluralité de segments annulaires adjacents formant une surface circulaire et continue. Ainsi, un segment annulaire de plate-forme supérieur ou inférieur peut servir de support pour une seule ou pour plusieurs aubes fixes. Pour la suite de la description, le terme plate-forme se référera indifféremment à une plate-forme unique ou à un segment de plate-forme.

Les surfaces internes 20, 22 des plates-formes supérieure 16 et inférieure 18 délimitent radialement un canal aérodynamique 24 d'écoulement du flux gazeux issu de la turbine haute-pression et traversant le distributeur de la turbine basse-pression. Ce canal aérodynamique est en outre délimité longitudinalement entre le bord d'attaque 14a de chaque aube fixe 14 de la turbine basse-pression et le bord de fuite 12a de chaque aube mobile 12 de la turbine haute-pression.

Selon l'invention, afin d'améliorer les performances de la turbine basse-pression tout en limitant les pertes de charges entre la turbine haute-pression et le distributeur, les plates-formes supérieure 16 et inférieure 18 comportent chacune une paroi amont 16b, 18b s'étendant longitudinalement dans le prolongement des parois avals 16a, 18a au-delà du bord d'attaque 14a des aubes fixes 14 vers le bord de fuite 12a des aubes mobiles 12. Ces parties amonts, qui sont réalisées en une seule pièce avec les parties avals des plates-formes, permettent ainsi d'allonger le canal aérodynamique 24.

Plus précisément, les parties amonts 16b, 18b des plates-formes supérieure 16 et inférieure 18 s'étendent au-delà du bord d'attaque 14a des aubes fixes 14 sur une longueur pouvant atteindre plus de 80 millimètres par exemple. Par ailleurs, la plate-forme supérieure 16 est fortement inclinée dans une direction radiale par rapport à l'axe longitudinal X-X de façon à augmenter les performances aérodynamiques de la turbine basse-pression par une augmentation rapide du rayon moyen de celle-ci. A titre d'exemple, la plate-forme supérieure peut présenter un angle d'inclinaison de l'ordre de 30°.

Selon une caractéristique avantageuse de l'invention, la paroi amont 16b de la plate-forme supérieure 16 et/ou la paroi amont 18b de la plate-inférieure 18 de support de l'aube fixe 14 comporte(nt) un circuit de refroidissement. Un tel circuit de refroidissement permet de diminuer les gradients de températures et la température moyenne au niveau de la surface interne 20 de la plate-forme supérieure 16 et/ou de la surface interne 22 de la plate-forme inférieure 18. De plus, ce circuit de refroidissement équipe, soit l'une des plates-formes supérieure 16 et inférieure 18, soit les deux.

L'air alimentant le circuit de refroidissement de la plate-forme supérieure 16 et/ou de la plate-forme inférieure 18 est avantageusement prélevé au niveau d'un dispositif classique de refroidissement de l'aube fixe 14. En effet, les aubes fixes du distributeur 10 sont généralement chacune équipées d'un dispositif de refroidissement. Typiquement, de l'air qui est prélevé au niveau d'une zone de la turbomachine satisfaisante en termes de pression et de température (par exemple au niveau du compresseur haute-pression) est introduit dans chaque aube fixe 14 du distributeur par son sommet 14b par l'intermédiaire d'un collecteur 26 traversant la plate-forme supérieure 16 et débouchant dans une cavité de refroidissement (non représentée sur les figures) aménagée dans l'aube fixe et pouvant éventuellement recevoir une chemise. L'air circule ensuite dans l'aube fixe 14 en suivant un chemin délimité par la cavité de refroidissement avant d'être évacué au niveau du pied 14c de l'aube par un orifice 27 traversant la plate-forme inférieure 18 et au niveau du bord de fuite 14d de l'aube fixe par des fentes 28 ou perçages aménagées sur celui-ci.

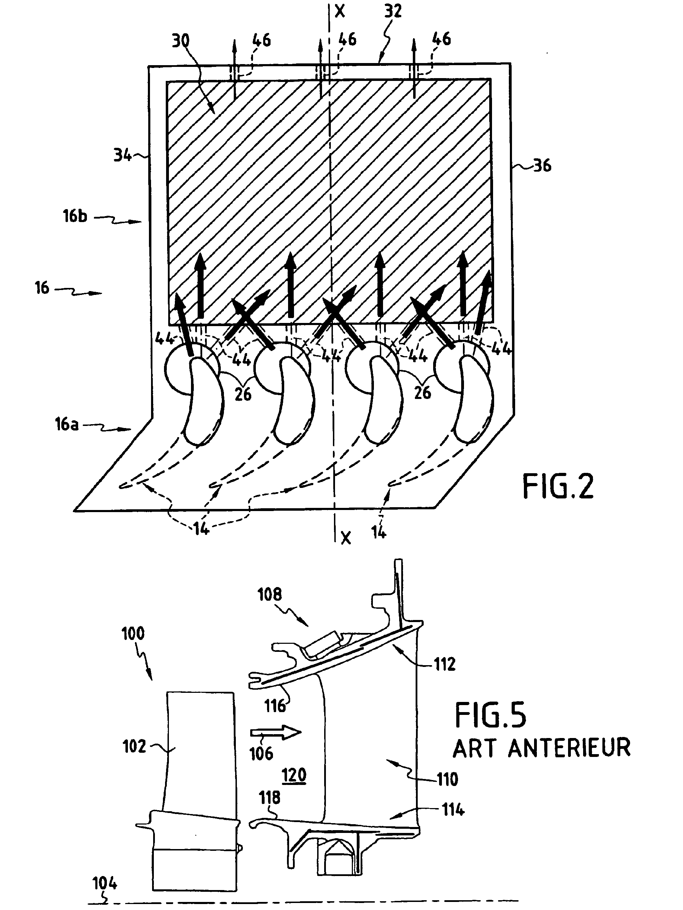

On décrira maintenant le circuit de refroidissement pouvant plus particulièrement équiper la partie amont 16b de la plate-forme supérieure 16 du distributeur en se référant notamment aux figures 1 et 2.

Ce circuit de refroidissement comporte notamment au moins une cavité 30 de circulation en air de refroidissement qui s'étend longitudinalement le long de la partie amont 16b de la plate-forme supérieure 16 entre une extrémité amont 32 de celle-ci et le bord d'attaque 14a des aubes fixes 14. Sur la figure 2, la plate-forme supérieure 16 est un segment de plate-forme supportant quatre aubes fixes 14 et comportant une seule cavité de refroidissement 30. Cette cavité s'étend tangentiellement entre les deux extrémités tangentielles 34, 36 de la plate-forme de sorte que l'air de refroidissement présent dans cette cavité couvre une surface maximum de la plate-forme supérieure. On peut toutefois imaginer que la plate-forme supérieure comporte plusieurs cavités s'étendant depuis le bord d'attaque des aubes fixes 14 jusqu'à son extrémité amont 32. Dans ce cas, l'espacement tangentiel entre deux cavités adjacentes devra être le plus faible possible de façon à permettre à l'air de refroidissement de couvrir une surface maximum.

La cavité 30 de refroidissement de la plate-forme supérieure peut être obtenue en formant un évidement 38 dans une partie externe de la plate-forme qui est recouvert par un dispositif d'étanchéité. Par exemple, ce dispositif d'étanchéité peut être une tôle métallique 40 brasée ou soudée sur les extrémités amont 32 et tangentielles 34, 36 de la plate-forme et sur un crochet 42 de la plate-forme supérieure qui est destiné à l'attache de celle-ci sur un carter de la turbomachine (non représenté sur les figures). Selon une variante de réalisation (non représentée), la cavité 30 de refroidissement peut également être obtenue directement par moulage. Dans ce cas, la plate-forme supérieure est réalisée par moulage et l'emplacement de la ou des cavités 30 est réservé par des noyaux solubles disposés dans le moule avant la coulée du métal. Par ailleurs, il peut être nécessaire de munir la cavité 30 de perturbateurs (non représentés sur les figures) disposés perpendiculairement à la direction d'écoulement de l'air dans la cavité de façon à augmenter l'échange thermique entre l'air de refroidissement et la plate-forme.

Pour alimenter en air la cavité 30 de refroidissement de la plate-forme supérieure 16, il est prévu de dériver une partie de l'air alimentant le dispositif de refroidissement de l'aube fixe 14 par au moins un orifice 44 s'ouvrant dans le collecteur 26 d'air de refroidissement de l'aube fixe et débouchant dans la cavité 30. Comme représenté sur la figure 1, le collecteur 26 peut par exemple être une douille permettant de diminuer les risques de fuite et d'optimiser les écoulements d'air. L'orifice 44 est calibré de façon à assurer un débit régulier de circulation d'air dans la cavité 30. On notera également que cet orifice peut être avantageusement pratiqué au niveau du crochet 42 de la plate-forme supérieure qui est destiné à l'attache de celle-ci sur un carter de la turbomachine. Ainsi, l'air traversant cet orifice permet également de refroidir un tel crochet.

Selon une caractéristique avantageuse de l'invention, afin de répartir de façon homogène l'air de refroidissement dans la cavité et donc d'éviter la formation de gradients de températures néfastes pour la durée de vie de la plate-forme, il peut être prévu d'aménager plusieurs orifices 44 pour chaque aube fixe 14, ces orifices ayant des inclinaisons différentes par rapport à un axe longitudinal de la plate-forme supérieure. Sur l'exemple de réalisation représenté sur la figure 2, la plate-forme supérieure 16 comporte ainsi, pour chaque aube fixe 14, trois orifices 44 ayant des inclinaisons différentes.

L'air ainsi prélevé par le ou les orifices 44 s'écoule dans la cavité 30 de refroidissement de la plate-forme supérieure 16 avant d'être évacué ou purgé par au moins un perçage 46 (au nombre de trois sur la figure 2) s'ouvrant dans la cavité et débouchant vers l'extérieur de la plate-forme. Ce ou ces perçages 46 sont pratiqués dans l'extrémité amont 32 de la plate-forme supérieure. Ils sont également calibrés de façon à assurer un débit régulier de circulation d'air dans la cavité 30. Par ailleurs, l'évacuation de l'air de la cavité 30 peut se faire indifféremment vers le canal aérodynamique 24, vers l'extérieur de celui-ci ou bien dans le prolongement de la plate-forme supérieure 16 (comme illustré sur la figure 1).

On décrira maintenant le circuit de refroidissement pouvant plus particulièrement équiper la partie amont 18b de la plate-forme inférieure 18 du distributeur en se référant notamment aux figures 1, 3 et 4.

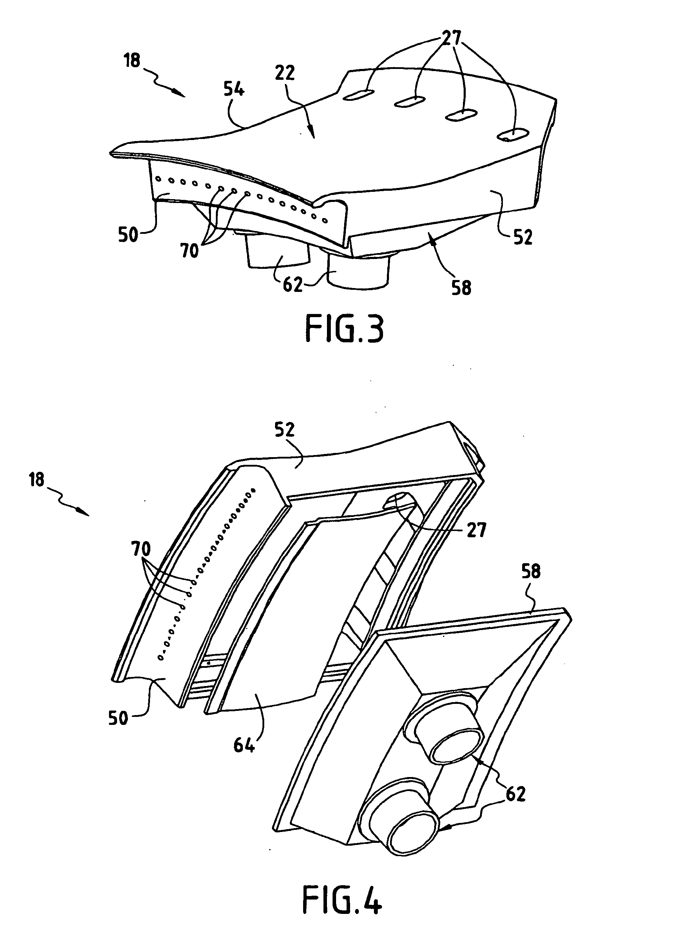

Ce circuit de refroidissement comporte également une cavité ou enceinte 48 de circulation en air de refroidissement qui s'étend longitudinalement le long de la partie amont 18b de la plate-forme inférieure 18 entre une extrémité amont 50 de celle-ci et le bord d'attaque 14a des aubes fixes 14. Sur la figure 1, cette enceinte 48 s'étend même au-delà, c'est à dire entre le bord d'attaque 14a et le bord de fuite 14d de l'aube fixe 14. Comme pour la plate-forme supérieure, la plate-forme inférieure 18 illustrée sur les figures 3 et 4 est un segment de plate-forme supportant quatre aubes fixes (non représentées). L'enceinte 48 s'étend également entre les deux extrémités tangentielles 52, 54 de la plate-forme inférieure de sorte que l'air de refroidissement présent dans cette enceinte couvre une surface maximum de la plate-forme inférieure.

L'enceinte 48 de refroidissement de la plate-forme inférieure peut également être obtenue en formant un évidement 56 dans une partie interne de la plate-forme qui est recouvert par un dispositif d'étanchéité. Le dispositif d'étanchéité de l'enceinte peut être formé par une tôle métallique 58 brasée ou soudée sur les extrémités amont 50 et tangentielles 52, 54 de la plate-forme et sur un crochet 60 destiné à l'attache sur celle-ci d'un flasque d'injection d'air (non représenté). Dans ce cas, la tôle d'étanchéité est munie d'une ouverture pour le passage d'au moins une douille de liaison 62 (au nombre de deux sur les figures 3 et 4) destinée à alimenter en air de refroidissement le flasque d'injection. L'air de refroidissement de l'aube fixe 14 est évacué au niveau du pied 14c de l'aube par l'orifice 27 traversant la plate-forme inférieure 18 afin d'alimenter en air de refroidissement l'enceinte 48 puis le flasque d'injection par les douilles de liaison 62. On notera qu'avec une telle configuration, il est quasiment possible d'aligner axialement l'orifice 27 d'évacuation de l'air de refroidissement de l'aube fixe avec le ou les douilles de liaison 62 d'alimentation du flasque ce qui permet de minimiser les pertes de charge. Cette configuration permet en outre de diminuer le nombre de douilles de liaison par rapport au nombre d'orifices d'évacuation (dans les techniques antérieures, à un orifice d'évacuation d'air correspond une douille de liaison du flasque).

Par ailleurs, à l'intérieur de l'enceinte 48, un déflecteur 64 est avantageusement disposé parallèlement à la partie aval 18b de la plate-forme inférieure de façon à former un canal annulaire 66 entre le déflecteur et la plate-forme. Ce canal annulaire 66 permet d'améliorer le refroidissement de la partie amont 18b de la plate-forme inférieure 18 en canalisant l'air le long de la surface externe de celle-ci. Ce déflecteur 64 peut être une tôle brasée ou soudée sur l'extrémité amont 50 de la plate-forme et qui s'étend parallèlement à la surface externe de la plate-forme inférieure entre cette extrémité amont et une paroi amont de l'orifice 27. Notamment, il est préférable que ce déflecteur ne s'étende pas au-delà de la paroi amont de l'orifice d'évacuation afin de ne pas perturber l'écoulement de l'air évacué par l'orifice. A son extrémité libre, le déflecteur 64 peut comprendre une partie 68 courbée dans la direction d'écoulement de l'air issu de l'orifice 27 d'alimentation de l'enceinte. Cette partie courbée permet de guider l'air évacué de l'aube fixe 14 vers le canal annulaire 66. Enfin, il peut être nécessaire de munir le canal annulaire 66 de perturbateurs (non représentés sur les figures) disposés perpendiculairement à la direction d'écoulement de l'air dans la cavité de façon à augmenter l'échange thermique entre l'air de refroidissement et la plate-forme.

L'air alimentant le canal annulaire 66 est ensuite évacué ou purgé par au moins un perçage 70 (une pluralité sur la figure 4) s'ouvrant dans le canal et débouchant vers l'extérieur de la plate-forme inférieure. Ce ou ces perçages 70 sont pratiqués dans l'extrémité amont 50 de la plate-forme. Ils sont également calibrés de façon à assurer un débit régulier de circulation d'air dans le canal annulaire. Par ailleurs, l'évacuation de l'air peut se faire indifféremment vers le canal aérodynamique 24, vers l'extérieur de celui-ci ou bien dans le prolongement de la plate-forme inférieure (comme illustré sur la figure 1).

Les plates-formes inférieure et supérieure ainsi définies présentent de nombreux avantages. Elles permettent notamment d'allonger le canal aérodynamique du distributeur de la turbine basse-pression sans ajout de masse préjudiciable. Les circuits de refroidissement équipant ces plates-formes diminuent les gradients de température et la température moyenne au niveau de la surface interne de celles-ci. Tous risques d'apparitions de marches préjudiciables au rendement du distributeur et de zones non refroidies créant des gradients de température néfastes pour la durée de vie sont donc évités. L'air alimentant ces circuits de refroidissement est dérivé de l'air destiné au refroidissement des aubes fixes sans pour autant dégrader le refroidissement de ces aubes. On notera en outre que, contrairement aux techniques connues, les plates-formes inférieure et supérieure allongées selon l'invention sont chacune réalisées en une seule pièce, par exemple de fonderie. De même, les perçages évacuant l'air des cavités de refroidissement des plates-formes peuvent être obtenus directement de fonderie.

## Revendications

1. Plate-forme annulaire (16, 18) de distributeur (10) d'une turbine basse-pression de turbomachine, ledit distributeur ayant un axe longitudinal (X-X) et comportant au moins une aube fixe (14) disposée en aval d'au moins une aube mobile (12) d'une turbine haute-pression, ladite plate-forme comportant une partie aval (16a, 18a) de support de ladite aube fixe (14) et une partie amont (16b, 18b) s'étendant longitudinalement au-delà d'un bord d'attaque (14a) de ladite aube fixe vers un bord de fuite (12a) de ladite aube mobile, ladite partie amont (16b, 18b) comportant un circuit de refroidissement formé d'au moins une cavité de refroidissement (30, 48) s'étendant longitudinalement entre une extrémité amont (32, 50) de ladite plate-forme et le bord d'attaque (14a) de l'aube fixe (14) et de moyens d'alimentation (44, 27) en air de ladite cavité (30, 48), **caractérisée en ce que** le circuit de refroidissement de la partie amont (16b, 18b) comporte en outre au moins un perçage d'évacuation (46, 70) s'ouvrant dans ladite cavité et débouchant vers l'extérieur de ladite plate-forme.

2. Plate-forme selon la revendications 1, **caractérisée en ce que** ladite cavité (30, 48) est obtenue en formant un évidement (38, 56) dans une partie externe de ladite plate-forme qui est recouvert par un dispositif d'étanchéité (40, 58).

3. Plate-forme selon l'une des revendications 1 et 2, **caractérisée en ce qu'**elle constitue une plate-forme supérieure (16) dudit distributeur de la turbine basse-pression.

4. Plate-forme selon la revendication 3, **caractérisée en ce que** lesdits moyens d'alimentation en air comportent au moins un orifice (44) s'ouvrant dans un collecteur d'air (26) destiné au refroidissement de l'aube fixe (14) et débouchant dans ladite cavité (30).

5. Plate-forme selon la revendication 4, **caractérisée en ce que** lesdits moyens d'alimentation comportent au moins deux orifices (44) ayant des inclinaisons différentes afin de répartir de façon homogène l'air de refroidissement dans ladite cavité (30).

6. Plate-forme selon l'une des revendications 1 et 2, **caractérisée en ce qu'**elle constitue une plate-forme inférieure (18) dudit distributeur de la turbine basse-pression.

7. Plate-forme selon la revendication 6, **caractérisée en ce que** lesdits moyens d'alimentation en air comportent un orifice (27) traversant ladite plate-forme et destiné à l'évacuation de l'air de refroidissement de ladite aube fixe (14).

8. Plate-forme selon la revendication 7, **caractérisée en ce qu'**elle comporte en outre au moins un déflecteur (64) disposé parallèlement à ladite partie amont (16b) de la plate-forme de façon à former un canal annulaire de refroidissement (66) entre ledit déflecteur et ladite plate-forme.

9. Distributeur de turbine basse-pression d'une turbomachine comportant une pluralité d'aubes fixes (14) supportées par au moins une plate-forme supérieure (16) selon l'une quelconque des revendications 3 à 5.

10. Distributeur de turbine basse-pression d'une turbomachine comportant une pluralité d'aubes fixes (14) supportées par au moins une plate-forme inférieure (18) selon l'une quelconque des revendications 6 à 8.

11. Distributeur de turbine basse-pression d'une turbomachine comportant une pluralité d'aubes fixes (14) supportées par au moins une plate-forme supérieure (16) selon l'une quelconque des revendications 3 à 5 et par au moins une plate-forme inférieure (18) selon l'une quelconque des revendications 6 à 8.

## Claims

1. An annular platform (16, 18) for the nozzle (10) of a low-pressure turbine in a turbomachine, said nozzle having a longitudinal axis (X-X) and comprising at least one fixed vane (14) disposed downstream from at least one moving blade (12) of a high-pressure turbine, said platform comprising a downstream portion (16a, 18a) supporting said fixed vane (14) and an upstream portion (16b, 18b) extending longitudinally beyond a leading edge (14a) of said fixed vane towards a trailing edge (12a) of said moving blade, said upstream portion (16b, 18b) including a cooling circuit that is formed by at least one cooling cavity (30, 48) extending longitudinally between an upstream end (32, 50) of said platform and the leading edge (14a) of the fixed vane (14) and by air feed means (44, 27) for feeding said cavity (30, 48), said platform being **characterised in that** the cooling circuit of the upstream portion (16b, 18b) includes at least one hole (46, 70) opening out into said cavity and leading to the outside of said platform.

2. A platform according to claim 1, **characterised in that** said cavity (30, 48) is obtained by forming a recess (38, 56) in an outside portion of said platform and covering the recess with a closure device (40, 58).

3. A platform according to claim 1 or 2, **characterised in that** it constitutes a top platform (16) of said high-pressure turbine nozzle.

4. A platform according to claim 3, **characterised in that** said feed means comprise at least one orifice (44) opening out into an air manifold (26) for cooling the fixed vane (14) and leading into said cavity (30).

5. A platform according to claim 4, **characterised in that** said air feed means comprise at least two orifices (44) having different angles of inclination so as to distribute the cooling air uniformly within said cavity (30).

6. A platform according to claim 1 or 2, **characterised in that** it constitutes a bottom platform (18) of said low-pressure turbine nozzle.

7. A platform according to claim 6, **characterised in that** said air feed means comprise an orifice (27) passing through said platform for exhausting cooling air from said fixed vane (14).

8. A platform according to claim 7, **characterised in that** it further comprises at least one deflector (64) disposed parallel to said upstream portion (16b) of the platform so as to form an annular cooling channel (66) between said deflector and said platform.

9. A nozzle for a low-pressure turbine of a turbomachine, the nozzle comprising a plurality of fixed vanes (14) supported by at least one top platform (16) according to any one of claims 3 to 5.

10. A nozzle for a low-pressure turbine of a turbomachine, the nozzle comprising a plurality of fixed vanes (14) supported by at least one bottom platform (18) according to any one of claims 6 to 8.

11. A nozzle for a low-pressure turbine of a turbomachine, the nozzle comprising a plurality of fixed vanes (14) supported by at least one top platform (16) according to any one of claims 3 to 5 and by at least one bottom platform (18) according to any one of claims 6 to 8.

## Patentansprüche

1. Ringförmige Plattform (16, 18) eines Leitrades (10) einer Niederdruckturbine einer Turbomaschine, wobei das Leitrad eine Längsachse (X-X) hat und wenigstens eine Leitschaufel (14) umfaßt, die stromabwärts wenigstens einer Laufschaufel (12) einer Hochdruckturbine angeordnet ist, wobei die genannte Plattform einen stromabwärtigen Teil (16a, 18a) zum Tragen der Leitschaufel (14) sowie einen stromaufwärtigen Teil (16b, 18b) umfaßt, der sich in Längsrichtung jenseits einer Eintrittskante (14a) der Leitschaufel in Richtung einer Austrittskante (12a) der Laufschaufel erstreckt, wobei der stromaufwärtige Teil (16b, 18b) einen Kühlkreis umfaßt, der von wenigstens einem Kühlhohlraum (30, 48), der sich in Längsrichtung zwischen einem stromaufwärtigen Ende (32, 50) der Plattform und der Eintrittskante (14a) der Leitschaufel (14) erstreckt, sowie von Mitteln (44, 27) zum Versorgen des genannten Hohlraums (30, 48) mit Luft gebildet ist, **dadurch gekennzeichnet, daß** der Kühlkreis des stromaufwärtigen Teils (16b, 18b) ferner wenigstens eine Abführbohrung (46, 70) umfaßt, die sich in den genannten Hohlraum öffnet und zur Außenseite der Plattform mündet.

2. Plattform nach Anspruch 1, **dadurch gekennzeichnet, daß** der Hohlraum (30, 48) **dadurch** erhalten wird, daß in einem Außenteil der Plattform eine Aussparung (38, 56) gebildet wird, die durch eine Dichtungsvorrichtung (40, 58) abgedeckt ist.

3. Plattform nach einem der Ansprüche 1 und 2, **dadurch gekennzeichnet, daß** sie eine obere Plattform (16) des Leitrades der Niederdruckturbine bildet.

4. Plattform nach Anspruch 3, **dadurch gekennzeichnet, daß** die Mittel zum Versorgen mit Luft wenigstens eine Öffnung (44) umfassen, die sich in einen zum Kühlen der Leitschaufel (14) bestimmten Luftsammelbehälter (26) öffnet und in den genannten Hohlraum (30) mündet.

5. Plattform nach Anspruch 4, **dadurch gekennzeichnet, daß** die genannten Versorgungsmittel wenigstens zwei Öffnungen (44) umfassen, die unterschiedliche Neigungen aufweisen, um die Kühlluft in dem Hohlraum (30) gleichmäßig zu verteilen.

6. Plattform nach einem der Ansprüche 1 und 2, **dadurch gekennzeichnet, daß** sie eine untere Plattform (18) des Leitrades der Niederdruckturbine bildet.

7. Plattform nach Anspruch 6, **dadurch gekennzeichnet, daß** die Mittel zum Versorgen mit Luft eine Öffnung (27) umfassen, welche die Plattform durchquert und dazu bestimmt ist, die Kühlluft aus der Leitschaufel (14) abzuführen.

8. Plattform nach Anspruch 7, **dadurch gekennzeichnet, daß** sie ferner wenigstens eine Ablenkeinrichtung (64) umfaßt, der parallel zu dem stromaufwärtigen Teil (16b) der Plattform angeordnet ist, so daß zwischen der Ablenkeinrichtung und der Plattform ein ringförmiger Kühlkanal (66) gebildet wird.

9. Leitrad einer Niederdruckturbine einer Turbomaschine mit einer Vielzahl von Leitschaufeln (14), die von wenigstens einer oberen Plattform (16) nach irgendeinem der Ansprüche 3 bis 5 getragen werden.

10. Leitrad einer Niederdruckturbine einer Turbomaschine mit einer Vielzahl von Leitschaufeln (14), die von wenigstens einer unteren Plattform (18) nach irgendeinem der Ansprüche 6 bis 8 getragen werden.

11. Leitrad einer Niederdruckturbine einer Turbomaschine mit einer Vielzahl von Leitschaufeln (14), die von wenigstens einer oberen Plattform (16) nach irgendeinem der Ansprüche 3 bis 5 und von wenigstens einer unteren Plattform (18) nach irgendeinem der Ansprüche 6 bis 8 getragen werden.
